# EUROPEAN PATENT APPLICATION

(11) **EP 4 826 170 A1**
(43) Date of publication of application: **21.10.2026**
(21) Application number: 24917325.3
(22) Date of filing: 17.12.2024
(51) Int. Cl.: E02F 9/22, F15B 11/08, F15B 21/14, F15B 13/02, F15B 13/04, F16K 3/26, F16K 3/32

(54) **CONSTRUCTION MACHINE**

(30) Priority: 09.01.2024 KR 20240003773
(71) Applicant: HD Construction Equipment Co., Ltd., Seongnam-si, Gyeonggi-do 13553 (KR)
(72) Inventor: SEO, Areum, Incheon 22021 (KR); CHO, Yonglak, Seongnam-si, Gyeonggi-do 13483 (KR); TAK, Hyeonggyun, Incheon 22758 (KR)
(74) Representative: Isarpatent
(86) International application number: PCT/KR2024/020474
(87) International publication number: WO 2025/150730

(57) **Abstract**

The present disclosure relates to a construction machine. The construction machine includes a pump unit including a first pump and a second pump connected to an engine, a pump line unit including a first pump line through which a flow rate is discharged from the first pump and a second pump line through which a flow rate is discharged from the second pump, a main control valve connected on the first pump line and the second pump line, a swing line configured to provide communication between the main control valve and a swing actuator, a boom line configured to provide communication between the main control valve and a boom actuator, a regeneration line including a first merging line communicating with the first pump line and a second merging line communicating with the second pump line, the regeneration line being configured to provide communication between at least one of the swing line and the boom line and the pump line unit, and a control unit configured to control to open one of the first merging line and the second merging line having higher regeneration efficiency. Accordingly, performance and fuel efficiency may be improved.

## Description

### [Technical Field]

The present disclosure relates to a construction machine, and more particularly, to a construction machine configured to perform civil engineering work or architectural work.

### [Background Art]

Generally, a construction machine is a machine used for civil engineering work or architectural work, such as an excavator or a loader. The construction machine includes a lower traveling unit, an upper swinging unit rotatably provided on an upper portion of the lower traveling unit, a boom rotatably coupled to the upper swinging unit, a hydraulic circuit for operating the upper swinging unit and the boom, and a control unit configured to control the hydraulic circuit.

However, in the conventional construction machine, there has been a problem in that performance and fuel efficiency are deteriorated.

### [Summary of Invention]

### [Technical Problem]

Accordingly, embodiments of the present disclosure provide a construction machine may improve performance and fuel efficiency.

### [Technical Solution]

To achieve the above objects, the present disclosure provides a construction machine comprising: a pump unit including a first pump and a second pump connected to an engine; a pump line including a first pump line through which a flow rate is discharged from the first pump and a second pump line through which a flow rate is discharged from the second pump; a main control valve connected on the first pump line and the second pump line; a swing line configured to provide communication between the main control valve and a swing actuator; a boom line configured to provide communication between the main control valve and a boom actuator; a regeneration line including a first merging line communicating with the first pump line and a second merging line communicating with the second pump line, the regeneration line being configured to provide communication between at least one of the swing line and the boom line and the pump line; and a control unit configured to control to open one of the first merging line and the second merging line having higher regeneration efficiency.

The regeneration line further includes a first merging valve configured to open and close the first merging line and a second merging valve configured to open and close the second merging line, and the control unit may determine opening and closing of the first merging valve or the second merging valve by comparing an output required for the first pump and an output required for the second pump.

The control unit may be configured to calculate the output required for the first pump by multiplying a pressure of the first pump and a required flow rate for the first pump, and to calculate the output required for the second pump by multiplying a pressure of the second pump and a required flow rate for the second pump.

The control unit may compare the required flow rate for the first pump with a predetermined reference flow rate, and provide communication through the regeneration line when the required flow rate for the first pump is greater than the reference flow rate.

The control unit may compare the pressure of the first pump with a predetermined reference pressure, and provide communication through the regeneration line when the pressure of the first pump is greater than the reference pressure.

When the required flow rate for the first pump is equal to or less than a predetermined reference flow rate or when the pressure of the first pump is equal to or less than a predetermined reference pressure, the output required for the first pump is considered to be less than the output required for the second pump, and the first merging line may be closed and the second merging line may be opened.

The regeneration line may further include a swing regeneration line branched from the swing line, a swing regeneration valve configured to open and close the swing regeneration line, a boom regeneration line branched from the boom line, a boom regeneration valve configured to open and close the boom regeneration line, and a terminal line configured to provide communication between the swing regeneration line and the boom regeneration line and the first merging line and the second merging line.

The regeneration line may further include a high-pressure accumulator for storing and discharging fluid, a high-pressure accumulator line configured to provide communication between the terminal line and the high-pressure accumulator, and a high-pressure accumulator valve configured to open and close the high-pressure accumulator line.

The regeneration line may further include a tank for storing fluid, a safety line configured to provide communication between the terminal line and the tank, and a safety valve configured to open and close the safety line.

The regeneration line may further include a third merging line branched from the swing regeneration line and communicating with the first pump line, and a third merging valve configured to open and close the third merging line.

The regeneration line may further include a low-pressure accumulator for storing and discharging fluid, a low-pressure accumulator line configured to provide communication between the low-pressure accumulator and the swing regeneration line, a low-pressure accumulator valve configured to open and close the low-pressure accumulator line, and a make-up line configured to provide communication between the low-pressure accumulator line and the swing line.

The boom actuator includes a cylinder, a piston capable of reciprocating inside the cylinder, and a rod extending from the piston to the outside of the cylinder. The inside of the cylinder is divided into a pair of chambers by the piston, and the pair of chambers includes a rod chamber in which the rod is received and a head chamber which is a chamber on the opposite side of the rod chamber. The boom line may include a head line configured to provide communication between the main control valve and the head chamber, a rod line configured to provide communication between the main control valve and the rod chamber, a cavitation line configured to provide communication between the head line and the rod line, and a cavitation valve configured to open and close the cavitation line.

The boom regeneration line may be branched from the cavitation line.

The swing line further includes a swing direction control valve configured to control a flow direction of fluid in the swing line, and the swing regeneration line may be configured to communicate with and be shielded from the swing line by the swing direction control valve.

Also, the present disclosure provides a construction machine comprising: a first pump configured to supply a flow rate to a swing actuator through a first pump line and a second pump configured to supply a flow rate to a boom actuator through a second pump line; a high-pressure accumulator for storing and discharging fluid from the swing actuator or the boom actuator; a first merging line configured to provide communication between the high-pressure accumulator and the first pump line; a second merging line configured to provide communication between the high-pressure accumulator and the second pump line; and a control unit configured to control to open one of the first merging line and the second merging line having higher regeneration efficiency.

### [Advantageous Effects]

The construction machine according to the present disclosure includes a pump unit including a first pump and a second pump connected to an engine; a pump line unit including a first pump line through which a flow rate is discharged from the first pump and a second pump line through which a flow rate is discharged from the second pump; a main control valve connected on the first pump line and the second pump line; a swing line configured to provide communication between the main control valve and a swing actuator; a boom line configured to provide communication between the main control valve and a boom actuator; a regeneration line including a first merging line communicating with the first pump line and a second merging line communicating with the second pump line, the regeneration line being configured to provide communication between at least one of the swing line and the boom line and the pump line unit; and a control unit configured to control to open one of the first merging line and the second merging line having higher regeneration efficiency. Accordingly, performance and fuel efficiency may be improved.

### [Brief Description of the Drawings]

FIG. 1 is a front view illustrating a construction machine according to an embodiment of the present disclosure.
FIG. 2 is a schematic diagram illustrating a hydraulic circuit in the construction machine of FIG. 1.
FIG. 3 is a schematic diagram for explaining an operating principle of the hydraulic circuit of FIG. 2, illustrating a flow rate in a normal mode.
FIG. 4 is a schematic diagram for explaining an operating principle of the hydraulic circuit of FIG. 2, illustrating a flow rate in a fuel efficiency mode among regeneration modes.
FIG. 5 is a schematic diagram for explaining an operating principle of the hydraulic circuit of FIG. 2, illustrating a flow rate in a performance mode among regeneration modes.
FIG. 6 is a schematic diagram for explaining an operating principle of the hydraulic circuit of FIG. 2, illustrating a flow rate in a combined mode among regeneration modes.
FIG. 7 is a flowchart illustrating logic for selecting a pump to be merged in the hydraulic circuit of FIG. 2.
FIG. 8 is a schematic diagram illustrating a flow of fluid in the hydraulic circuit of FIG. 2 during a boom-down operation in the normal mode.
FIG. 9 is a schematic diagram illustrating a flow of fluid in the hydraulic circuit of FIG. 2 when the fluid is stored in a high-pressure accumulator during a boom-down operation in the regeneration mode.
FIG. 10 is a schematic diagram illustrating a flow of fluid in the hydraulic circuit of FIG. 2 when the fluid cannot be stored in the high-pressure accumulator during a boom-down operation in the regeneration mode.
FIG. 11 is a schematic diagram illustrating a flow of fluid in the hydraulic circuit of FIG. 2 when the fluid is merged into the pump without passing through the high-pressure accumulator during a boom-down operation in the regeneration mode.
FIG. 12 is a schematic diagram illustrating a flow of fluid in the hydraulic circuit of FIG. 2 during a boom-up operation in the normal mode.
FIG. 13 is a schematic diagram illustrating a flow of fluid in the hydraulic circuit of FIG. 2 during a boom-up operation in the regeneration mode.
FIG. 14 is a schematic diagram illustrating a flow of fluid in the hydraulic circuit of FIG. 2 during a swing-acceleration operation in the normal mode.
FIG. 15 is a schematic diagram illustrating a flow of fluid in the hydraulic circuit of FIG. 2 during a swing-acceleration operation in the regeneration mode.
FIG. 16 is a schematic diagram illustrating a flow of fluid in the hydraulic circuit of FIG. 2 during a swing-deceleration operation in the normal mode.
FIG. 17 is a schematic diagram illustrating a flow of fluid in the hydraulic circuit of FIG. 2 when the fluid is stored in the high-pressure accumulator during a swing-deceleration operation in the regeneration mode.
FIG. 18 is a schematic diagram illustrating a flow of fluid in the hydraulic circuit of FIG. 2 when the fluid cannot be stored in the high-pressure accumulator or merging into a first pump is required during a swing-deceleration operation in the regeneration mode.
FIG. 19 is a schematic diagram illustrating a flow of fluid in the hydraulic circuit of FIG. 2 during a jack-up operation in the regeneration mode.
FIG. 20 is a schematic diagram illustrating a flow of fluid in the hydraulic circuit of FIG. 2 during an idle operation in the normal mode.
FIG. 21 is a flowchart illustrating logic for determining a condition and a flow rate for merging fluid into a pump in a hydraulic circuit of a construction machine according to another embodiment of the present disclosure.
FIG. 22 is a schematic diagram for explaining an operating principle of the hydraulic circuit controlled according to the logic of FIG. 21, illustrating a flow rate when merging does not occur because an output of the pump is small.
FIG. 23 is a schematic diagram for explaining an operating principle of the hydraulic circuit controlled according to the logic of FIG. 21, illustrating a flow rate when the output of the pump is small but an operator desires merging to occur when a bucket actuator is operated.

### [Description of Embodiments]

Hereinafter, a construction machine according to the present disclosure will be described in detail with reference to the accompanying drawings.

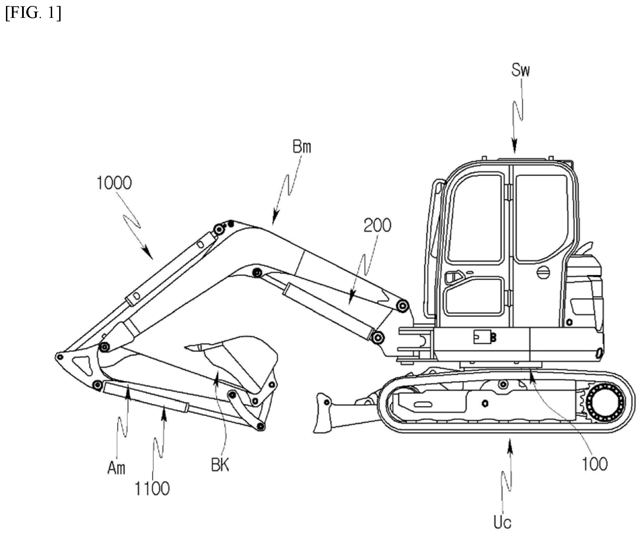

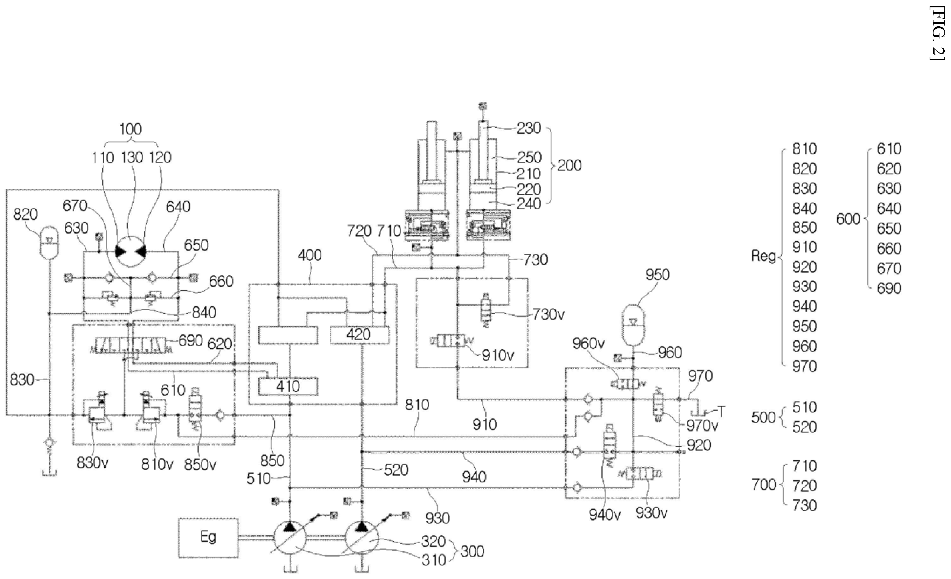

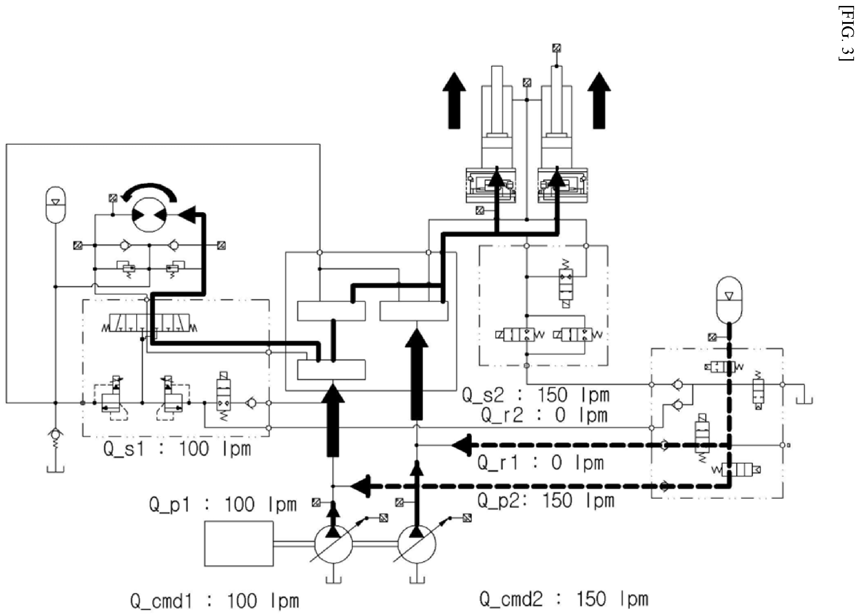

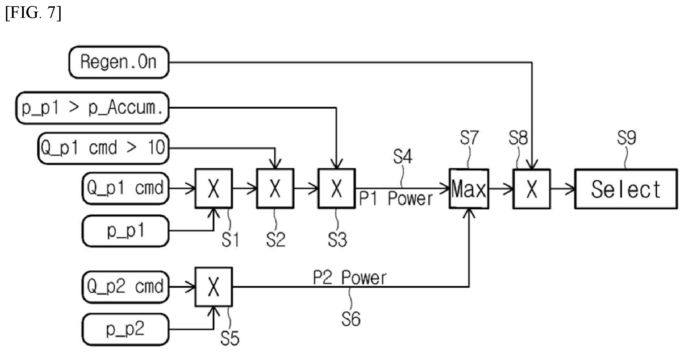

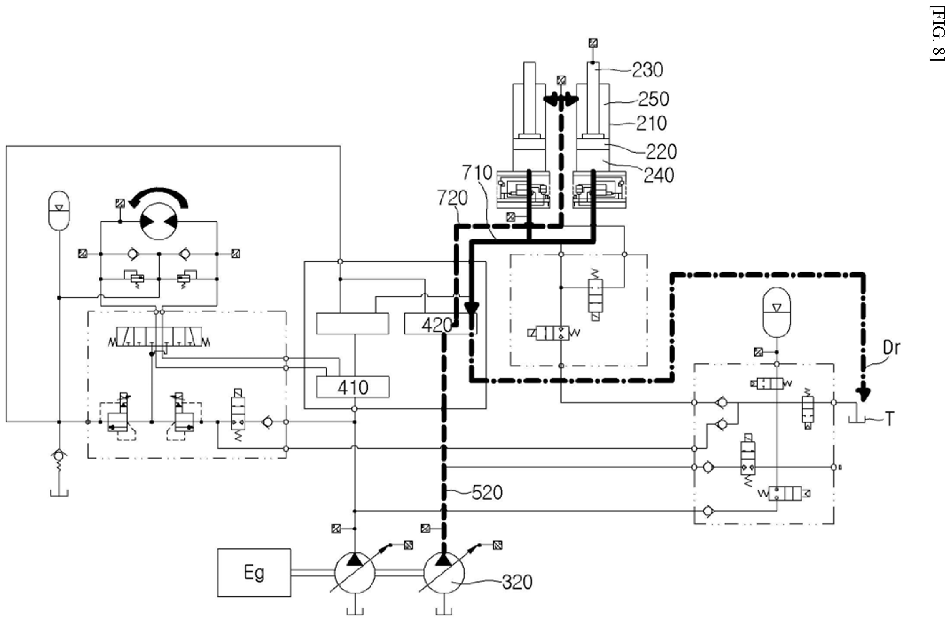

FIG. 1 is a front view illustrating a construction machine according to an embodiment of the present disclosure, and FIG. 2 is a schematic diagram illustrating a hydraulic circuit in the construction machine of FIG. 1. FIGS. 3 to 6 are schematic diagrams for explaining an operating principle of the hydraulic circuit of FIG. 2. FIG. 7 is a flowchart illustrating logic for selecting a pump to be merged in the hydraulic circuit of FIG. 2. FIGS. 8 to 20 are schematic diagrams illustrating a flow of fluid in the hydraulic circuit of FIG. 2 according to modes and operations.

Referring to FIG. 1, a construction machine according to an embodiment of the present disclosure may include a lower traveling unit Uc capable of moving along the ground, an upper swinging unit Sw rotatably provided on an upper portion of the lower traveling unit Uc, a boom Bm rotatably coupled to the upper swinging unit Sw, an arm Am rotatably coupled to a distal end portion of the boom Bm, a bucket Bk rotatably coupled to a distal end portion of the arm Am, a hydraulic circuit for operating the upper swinging unit Sw, the boom Bm, the arm Am, and the bucket Bk, and a control unit configured to control the hydraulic circuit.

Referring to FIG. 2, the hydraulic circuit may include a swing actuator 100 for rotating the upper swinging unit Sw, a boom actuator 200 for rotating the boom Bm, a pump unit 300 driven by receiving power from an engine Eg, a main control valve 400 for transferring fluid transported by the pump unit 300 to the swing actuator 100 and the boom actuator 200, a pump line 500 configured to provide communication between the pump unit 300 and the main control valve 400, a swing line 600 configured to provide communication between the main control valve 400 and the swing actuator 100, and a boom line 700 configured to provide communication between the main control valve 400 and the boom actuator 200.

The swing actuator 100 may include a first opening 110 and a second opening 120 communicating with each other, and a rotor 130 connected to the upper swinging unit Sw and configured to rotate in one direction and an opposite direction according to a flow direction of fluid between the first opening 110 and the second opening 120.

The boom actuator 200 may include a cylinder 210 connected to the upper swinging unit Sw, a piston 220 capable of reciprocating inside the cylinder 210, and a rod 230 extending from the piston 220 to the outside of the cylinder 210 and connected to the boom Bm.

Here, the inside of the cylinder 210 is divided into a pair of chambers 240 and 250 by the piston 220, and the pair of chambers 240 and 250 may include a rod chamber 250 in which the rod 230 is received and a head chamber 240 which is a chamber on the opposite side of the rod chamber 250.

The pump unit 300 may include a first pump 310 and a second pump 320 connected in parallel to the engine Eg.

The main control valve 400 may include a swing main control valve 410 for transferring fluid to the swing actuator 100 and a boom main control valve 420 for transferring fluid to the boom actuator 200.

The pump line 500 may include a first pump line 510 configured to provide communication between the first pump 310 and the swing main control valve 410, and a second pump line 520 configured to provide communication between the second pump 320 and the boom main control valve 420.

The swing line 600 may include a swing direction control valve 690 for controlling a flow direction of fluid in the swing line 600, a first swing line 610 configured to provide communication between the swing direction control valve 690 and one side of the swing main control valve 410, a second swing line 620 configured to provide communication between the swing direction control valve 690 and the other side of the swing main control valve 410, a third swing line 630 configured to provide communication between the swing direction control valve 690 and the first opening 110 of the swing actuator 100, a fourth swing line 640 configured to provide communication between the swing direction control valve 690 and the second opening 120 of the swing actuator 100, a fifth swing line 650 configured to allow fluid to be discharged to the third swing line 630 and the fourth swing line 640 while not allowing fluid to be introduced from the third swing line 630 and the fourth swing line 640, a sixth swing line 660 configured to allow fluid to be introduced from the third swing line 630 and the fourth swing line 640 while not allowing fluid to be discharged to the third swing line 630 and the fourth swing line 640, and a seventh swing line 670 configured to provide communication between the fifth swing line 650 and the sixth swing line 660.

The boom line 700 may include a head line 710 configured to provide communication between the boom main control valve 420 and the head chamber 240, a rod line 720 configured to provide communication between the main control valve 400 and the rod chamber 250, a cavitation line 730 configured to provide communication between the head line 710 and the rod line 720, and a cavitation valve 730v configured to open and close the cavitation line 730.

Here, the hydraulic circuit according to the present embodiment may further include a regeneration line Reg configured to provide communication between at least one of the swing line 600 and the boom line 700 and the pump line 500.

Specifically, the regeneration line Reg may include a swing regeneration line 810 configured to communicate with and be shielded from the swing line 600 by the swing direction control valve 690, a swing regeneration valve 810v configured to open and close the swing regeneration line 810, a low-pressure accumulator 820 for storing and discharging low-pressure fluid, a low-pressure accumulator line 830 configured to provide communication between the low-pressure accumulator 820 and the swing regeneration line 810, a low-pressure accumulator valve 830v configured to open and close the low-pressure accumulator line 830, and a make-up line 840 configured to provide communication between the low-pressure accumulator line 830 and the fifth swing line 650, the sixth swing line 660, and the seventh swing line 670.

Also, the regeneration line Reg may further include a boom regeneration line 910 branched from the cavitation line 730, and a boom regeneration valve 910v configured to open and close the boom regeneration line 910.

Also, the regeneration line Reg may further include a first merging line 930 communicating with the first pump line 510, a first merging valve 930v configured to open and close the first merging line 930, a second merging line 940 communicating with the second pump line 520, a second merging valve 940v configured to open and close the second merging line 940, and a terminal line 920 configured to provide communication between the swing regeneration line 810 and the boom regeneration line 910 and the first merging line 930 and the second merging line 940.

Also, the regeneration line Reg may further include a high-pressure accumulator 950 for storing and discharging high-pressure fluid, a high-pressure accumulator line 960 configured to provide communication between the terminal line 920 and the high-pressure accumulator 950, and a high-pressure accumulator valve 960v configured to open and close the high-pressure accumulator line 960.

Also, the regeneration line Reg may further include a tank T for storing discharged fluid, a safety line 970 configured to provide communication between the terminal line 920 and the tank T, and a safety valve 970v configured to open and close the safety line 970.

Here, the tank T may also communicate with the main control valve 400 through a drain line Dr.

Also, the regeneration line Reg may further include a third merging line 850 branched from the swing regeneration line 810 and communicating with the first pump line 510, and a third merging valve 850v configured to open and close the third merging line 850.

The control unit may be formed to improve fuel efficiency and performance by using such a hydraulic circuit.

Specifically, a flow rate of fluid supplied to the main control valve 400 through the pump line 500 is referred to as a supply flow rate (Q_s1, Q_s2), a flow rate of fluid supplied by the pump unit 300 to the pump line 500 is referred to as a pump flow rate (Q_p1, Q_p2), and a flow rate of fluid supplied to the pump line 500 through the regeneration line Reg is referred to as a regeneration flow rate (Q_r1, Q_r2). In this case, the control unit may be configured to determine the pump flow rate (Q_p1, Q_p2) from a difference between the supply flow rate (Q_s1, Q_s2), which is determined according to a mode, and the regeneration flow rate (Q_r1, Q_r2), and to drive the pump unit 300.

Here, the supply flow rate (Q_s1, Q_s2) is a sum of a basic supply flow rate (Q_cmd1, Q_cmd2), which is a minimum flow rate required to operate the swing actuator 100 and the boom actuator 200, and an additional supply flow rate (Q_add1, Q_add2), which is a flow rate exceeding the basic supply flow rate (Q_cmd1, Q_cmd2). The basic supply flow rate (Q_cmd1, Q_cmd2) is determined according to an input value of an operator, and the additional supply flow rate (Q_add1, Q_add2) is determined by multiplying a maximum regeneration flow rate (Q_max1, Q_max2), which is a maximum value of the regeneration flow rate (Q_r1, Q_r2), by a predetermined performance constant. The performance constant may be determined in a range of 0 to 1 according to the mode.

Also, the regeneration flow rate (Q_r1, Q_r2) is determined by multiplying the maximum regeneration flow rate (Q_max1, Q_max2) by a predetermined regeneration constant, and the regeneration constant may be determined in a range of 0 to 1 according to the mode.

More specifically, referring to FIG. 3, the operator may select a normal mode in which the regeneration line Reg is deactivated and input the basic supply flow rate (Q_cmd1, Q_cmd2) as 250 lpm (Q_cmd1: 100 lpm, Q_cmd2: 150 lpm) through a joystick. In this case, the performance constant is determined to be 0, the additional supply flow rate (Q_add1, Q_add2) is determined to be 0 lpm (Q_add1: 0 lpm, Q_add2: 0 lpm), and the supply flow rate (Q_s1, Q_s2) may be determined to be 250 lpm (Q_s1: 100 lpm, Q_s2: 150 lpm). Also, the regeneration constant is determined to be 0, and the regeneration flow rate (Q_r1, Q_r2) may be determined to be 0 lpm (Q_r1: 0 lpm, Q_r2: 0 lpm). Accordingly, the pump flow rate (Q_p1, Q_p2) is determined to be 250 lpm (Q_p1: 100 lpm, Q_p2: 150 lpm), which is obtained by subtracting the regeneration flow rate (Q_r1, Q_r2) from the supply flow rate (Q_s1, Q_s2), and the pump unit 300 may be controlled to discharge the determined flow rate.

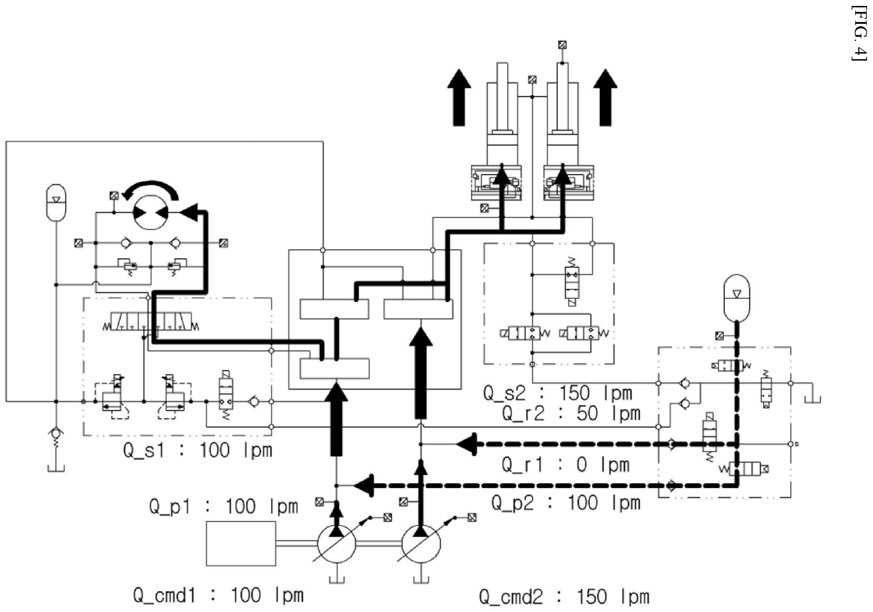

On the other hand, referring to FIG. 4, the operator may select a fuel efficiency mode among regeneration modes in which the regeneration line Reg is activated and input the basic supply flow rate (Q_cmd1, Q_cmd2) as 250 lpm (Q_cmd1: 100 lpm, Q_cmd2: 150 lpm) through a joystick. In this case, the performance constant is determined to be 0, the additional supply flow rate (Q_add1, Q_add2) is determined to be 0 lpm (Q_add1: 0 lpm, Q_add2: 0 lpm), and the supply flow rate (Q_s1, Q_s2) may be determined to be 250 lpm (Q_s1: 100 lpm, Q_s2: 150 lpm). Meanwhile, the regeneration constant is determined as a maximum value currently possible in a range of 0 to 1. Assuming that the maximum value currently possible among the regeneration constants is 1 and the maximum regeneration flow rate (Q_max1, Q_max2) is 50 lpm, the regeneration flow rate (Q_r1, Q_r2) may be determined to be 50 lpm (Q_r1: 0 lpm, Q_r2: 50 lpm), which is obtained by multiplying the maximum regeneration flow rate (Q_max1, Q_max2) by the regeneration constant. Accordingly, the pump flow rate (Q_p1, Q_p2) is determined to be 200 lpm (Q_p1: 100 lpm, Q_p2: 100 lpm), which is obtained by subtracting the regeneration flow rate (Q_r1, Q_r2) from the supply flow rate (Q_s1, Q_s2), and the pump unit 300 may be controlled to discharge the determined flow rate. In this case, compared to the case of FIG. 3, energy required for the pump unit 300 is saved, and thus fuel efficiency may be improved.

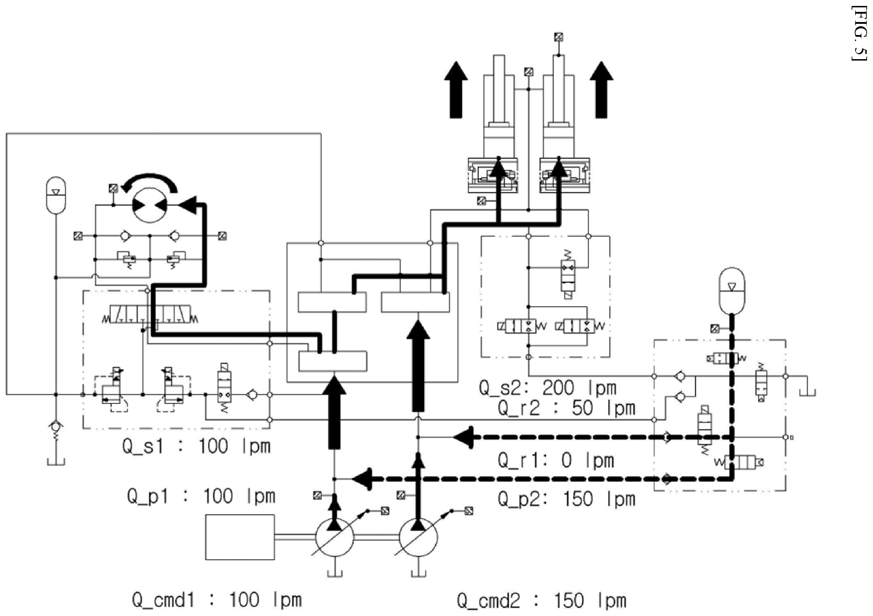

Alternatively, referring to FIG. 5, the operator may select a performance mode among the regeneration modes and input the basic supply flow rate (Q_cmd1, Q_cmd2) as 250 lpm (Q_cmd1: 100 lpm, Q_cmd2: 150 lpm) through a joystick. In this case, the performance constant is determined to be 1, and assuming that the maximum regeneration flow rate (Q_max1, Q_max2) is 50 lpm, the additional supply flow rate (Q_add1, Q_add2) is determined to be 50 lpm (Q_add1: 0 lpm, Q_add2: 50 lpm), and the supply flow rate (Q_s1, Q_s2) may be determined to be 300 lpm (Q_s1: 100 lpm, Q_s2: 200 lpm), which is a sum of the basic supply flow rate (Q_cmd1, Q_cmd2) and the additional supply flow rate (Q_add1, Q_add2). Meanwhile, the regeneration constant is determined as a maximum value currently possible in a range of 0 to 1. Assuming that the maximum value currently possible among the regeneration constants is 1, the regeneration flow rate (Q_r1, Q_r2) may be determined to be 50 lpm (Q_r1: 0 lpm, Q_r2: 50 lpm), which is obtained by multiplying the maximum regeneration flow rate (Q_max1, Q_max2) by the regeneration constant. Accordingly, the pump flow rate (Q_p1, Q_p2) is determined to be 250 lpm (Q_p1: 100 lpm, Q_p2: 150 lpm), which is obtained by subtracting the regeneration flow rate (Q_r1, Q_r2) from the supply flow rate (Q_s1, Q_s2), and the pump unit 300 may be controlled to discharge the determined flow rate. In this case, compared to the case of FIG. 3, the energy required for the pump unit 300 is the same, so there is no improvement in fuel efficiency, but the flow rate of fluid supplied to the main control valve 400 is increased, and thus performance may be improved.

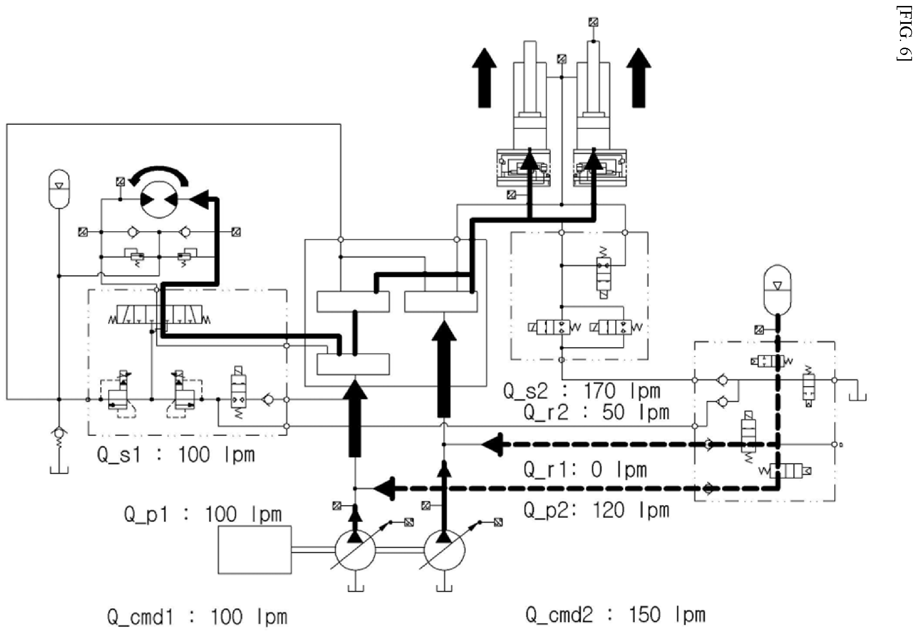

Alternatively, referring to FIG. 6, the operator may select a combined mode among the regeneration modes and input the basic supply flow rate (Q_cmd1, Q_cmd2) as 250 lpm (Q_cmd1: 100 lpm, Q_cmd2: 150 lpm) through a joystick. In this case, the performance constant is determined as a value desired by the operator in a range of more than 0 and less than 1. Assuming that the operator desires 0.4 as the performance constant and the maximum regeneration flow rate (Q_max1, Q_max2) is 50 lpm, the additional supply flow rate (Q_add1, Q_add2) is determined to be 20 lpm (Q_add1: 0 lpm, Q_add2: 20 lpm), and the supply flow rate (Q_s1, Q_s2) may be determined to be 270 lpm (Q_s1: 100 lpm, Q_s2: 170 lpm), which is a sum of the basic supply flow rate (Q_cmd1, Q_cmd2) and the additional supply flow rate (Q_add1, Q_add2). Meanwhile, the regeneration constant is determined as a maximum value currently possible in a range of 0 to 1. Assuming that the maximum value currently possible among the regeneration constants is 1, the regeneration flow rate (Q_r1, Q_r2) may be determined to be 50 lpm (Q_r1: 0 lpm, Q_r2: 50 lpm), which is obtained by multiplying the maximum regeneration flow rate (Q_max1, Q_max2) by the regeneration constant. Accordingly, the pump flow rate (Q_p1, Q_p2) is determined to be 220 lpm (Q_p1: 100 lpm, Q_p2: 120 lpm), which is obtained by subtracting the regeneration flow rate (Q_r1, Q_r2) from the supply flow rate (Q_s1, Q_s2), and the pump unit 300 may be controlled to discharge the determined flow rate. In this case, the fuel efficiency improvement effect is reduced compared to the case of FIG. 4, and the performance improvement effect is reduced compared to the case of FIG. 5, but fuel efficiency and performance may be improved compared to the case of FIG. 3.

Meanwhile, although it is assumed that the second merging line 940 is opened in the cases of FIGS. 4 to 6, the control unit may be configured to open one of the first merging line 930 and the second merging line 940 having higher regeneration efficiency.

That is, the control unit compares an output (P1 Power) required for the first pump 310 and an output (P2 Power) required for the second pump 320 according to logic shown in FIG. 7. When the output (P1 Power) required for the first pump 310 is greater than the output (P2 Power) required for the second pump 320, the control unit may be configured to open the first merging line 930 with a first merging valve 930v and close the second merging line 940 with a second merging valve 940v. When the output (P1 Power) required for the first pump 310 is less than the output (P2 Power) required for the second pump 320, the control unit may be configured to close the first merging line 930 with the first merging valve 930v and open the second merging line 940 with the second merging valve 940v.

Specifically, the logic shown in FIG. 7 includes: a first pump information inputting step (S1) of receiving a pressure (p_p1) of the first pump 310 and a required flow rate (Q_p1 cmd) for the first pump 310; a first pump output calculating step (S4) of calculating the output (P1 Power) required for the first pump 310 by multiplying the pressure (p_p1) of the first pump 310 and the required flow rate (Q_p1 cmd) for the first pump 310; a second pump information inputting step (S5) of receiving a pressure (p_p2) of the second pump 320 and a required flow rate (Q_p2 cmd) for the second pump 320; a second pump output calculating step (S6) of calculating the output (P2 Power) required for the second pump 320 by multiplying the pressure (p_p2) of the second pump 320 and the required flow rate (Q_p2 cmd) for the second pump 320; a pump output comparing step (S7) of comparing the output (P1 Power) required for the first pump 310 and the output (P2 Power) required for the second pump 320; and a merging line selecting step (S9) of opening the first merging line 930 with the first merging valve 930v and closing the second merging line 940 with the second merging valve 940v when the output (P1 Power) required for the first pump 310 is greater than the output (P2 Power) required for the second pump 320, and closing the first merging line 930 with the first merging valve 930v and opening the second merging line 940 with the second merging valve 940v when the output (P1 Power) required for the first pump 310 is less than the output (P2 Power) required for the second pump 320. The control unit may be configured to control the regeneration line Reg according to the logic.

Here, the logic includes a first pump flow rate comparing step (S2) of comparing the required flow rate (Q_p1 cmd) for the first pump 310 with a predetermined reference flow rate (e.g., 10 lpm) between the first pump information inputting step (S1) and the first pump output calculating step (S4). The logic may be formed such that the first pump output calculating step (S4) is performed when it is determined in the first pump flow rate comparing step (S2) that the required flow rate (Q_p1 cmd) for the first pump 310 is greater than the reference flow rate.

Also, the logic includes a first pump pressure comparing step (S3) of comparing the pressure (p_p1) of the first pump 310 with a predetermined reference pressure (e.g., an accumulator pressure (p_Accm.)) between the first pump information inputting step (S1) and the first pump output calculating step (S4). The logic may be formed such that the first pump output calculating step (S4) is performed when it is determined in the first pump pressure comparing step (S3) that the pressure (p_p1) of the first pump 310 is greater than the reference pressure.

Also, the logic may be formed such that, when the first pump output calculating step (S4) is not performed, the output (P1 Power) required for the first pump 310 is considered to be less than the output (P2 Power) required for the second pump 320 in the pump output comparing step (S7), and the first merging line 930 is closed and the second merging line 940 is opened in the merging line selecting step (S9).

Also, the logic includes a mode checking step (S8) of checking whether the operator has selected the regeneration mode between the pump output comparing step (S7) and the merging line selecting step (S9). The logic may be formed such that the merging line selecting step (S9) is performed when it is confirmed in the mode checking step (S8) that the regeneration mode has been selected.

Meanwhile, the control unit may be configured to activate the regeneration line Reg when an operator has an intention to activate the regeneration line Reg, a situation allows for the activation of the regeneration line Reg, and an operation to be performed is an operation having high regeneration efficiency.

Specifically, an operation frequently used by a user includes a boom-down operation in which the piston 220 is moved toward the head chamber 240 and the boom actuator 200 is contracted.

Referring to FIG. 8, when the operator selects the normal mode and performs the boom-down operation, fluid in the head chamber 240 may flow to the main control valve 400 through the head line 710 by a load of the boom Bm applied through the rod 230, and then be discharged to the tank T through the drain line Dr. As fluid discharged from the second pump 320 flows into the rod chamber 250 through the second pump line 520, the main control valve 400, and the rod line 720, cavitation in the rod chamber 250 may be prevented.

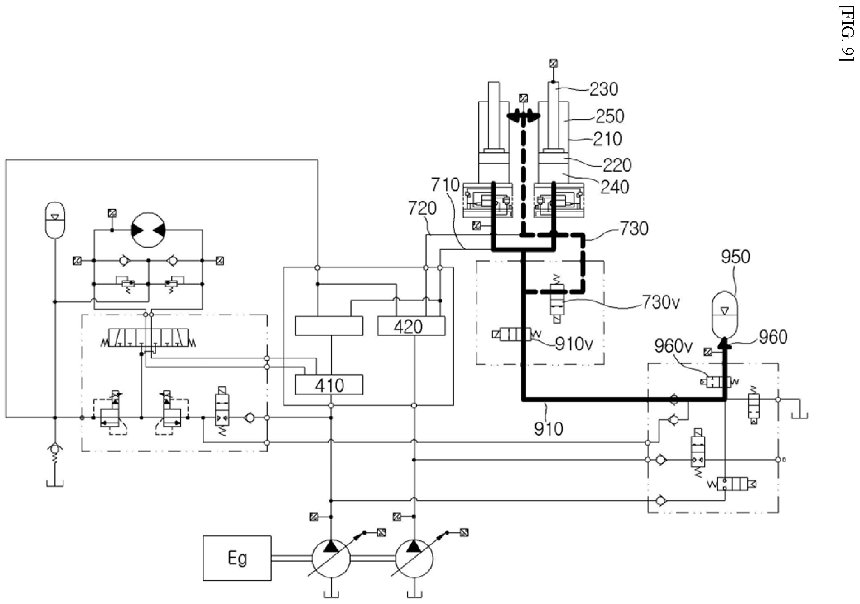

On the other hand, referring to FIGS. 9 to 11, when the operator selects the regeneration mode and performs the boom-down operation, the cavitation valve 730v opens the cavitation line 730, and a portion of the fluid in the head line 710 flows to the rod line 720 through the cavitation line 730, whereby cavitation in the rod chamber 250 may be prevented. Here, since it is not necessary to drive the second pump 320 to prevent the cavitation in the rod chamber 250, fuel efficiency may be improved compared to the case of FIG. 8.

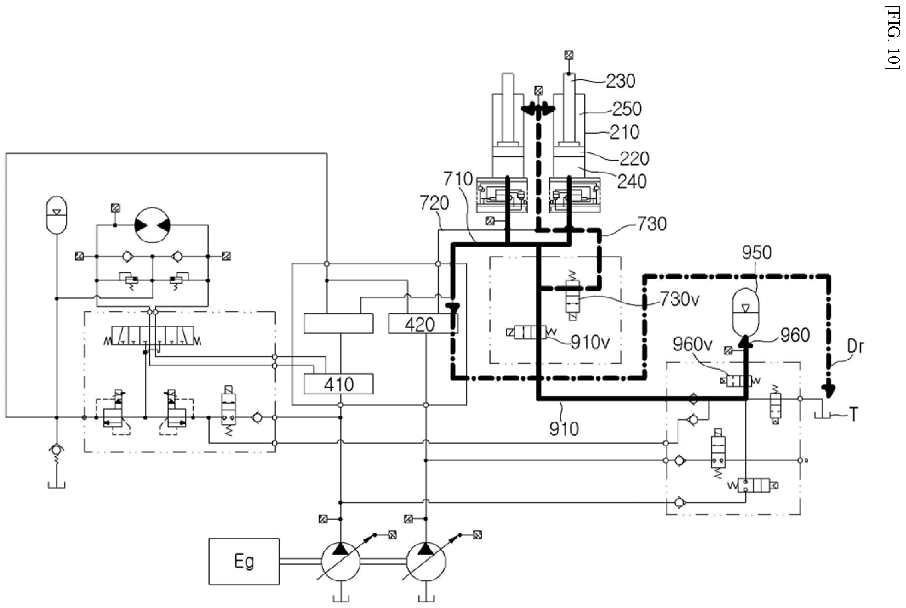

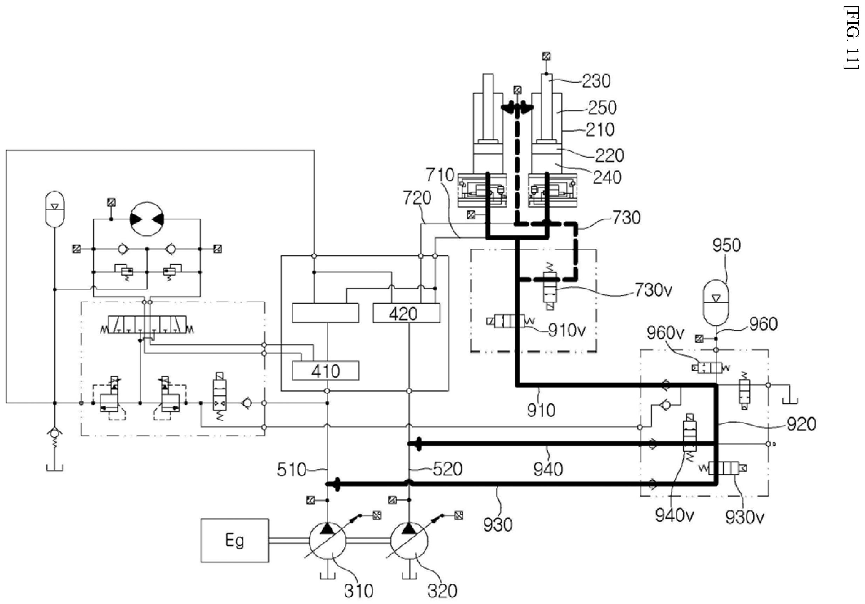

Further, the boom regeneration valve 910v opens the boom regeneration line 910, and the remainder of the fluid in the head line 710 flows to the terminal line 920 through the boom regeneration line 910 and then may be stored in the high-pressure accumulator 950 or flow to the pump line 500. That is, as shown in FIGS. 9 and 10, the high-pressure accumulator valve 960v opens the high-pressure accumulator line 960 so that at least a portion of the fluid in the terminal line 920 is stored in the high-pressure accumulator 950, and the fluid stored in the high-pressure accumulator 950 may be discharged later. Alternatively, as shown in FIG. 11, when fluid cannot be stored in the high-pressure accumulator 950 or a flow rate required for the pump line 500 is large, the high-pressure accumulator valve 960v closes the high-pressure accumulator line 960, and the merging valve opens the merging line, so that at least a portion of the fluid in the terminal line 920 may flow to the pump line 500 through the merging line. By regenerating the fluid of the boom line 700 in this manner, fuel efficiency and/or performance may be improved compared to the case of FIG. 8. Here, in the case of FIG. 10, when fluid cannot be stored in the high-pressure accumulator 950, the fluid in the head line 710 is discharged to the tank T through the main control valve and the drain line Dr, whereby a speed of the boom actuator 200 may be prevented from becoming slower than a target speed when regenerating the fluid of the boom line 700.

Also, an operation frequently used by the user includes a boom-up operation in which the piston 220 is moved toward the rod chamber 250 and the boom actuator 200 is extended.

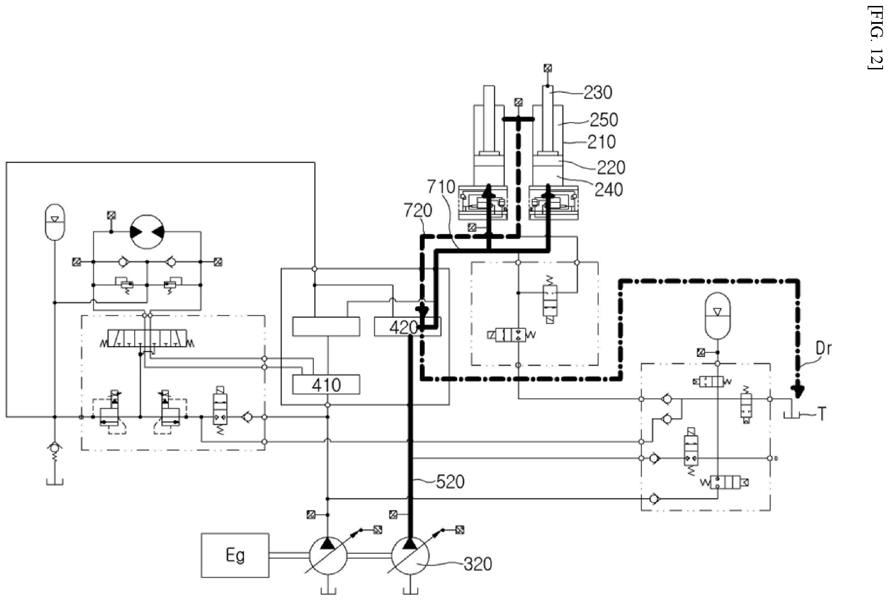

Referring to FIG. 12, when the operator selects the normal mode and performs the boom-up operation, fluid discharged from the second pump 320 may flow into the head chamber 240 through the second pump line 520, the main control valve 400, and the head line 710. Further, fluid in the rod chamber 250 may flow to the main control valve 400 through the rod line 720 and then be discharged to the tank T through the drain line Dr.

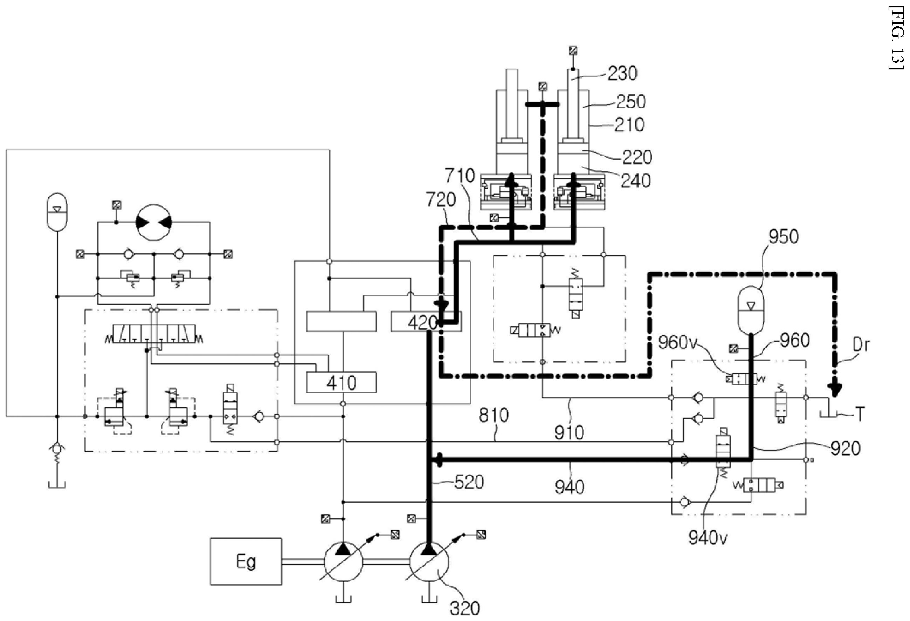

On the other hand, referring to FIG. 13, when the operator selects the regeneration mode and performs the boom-up operation, the high-pressure accumulator valve 960v opens the high-pressure accumulator line 960, and the second merging valve 940v opens the second merging line 940, so that fluid in the high-pressure accumulator 950 flows to the second pump line 520 through the high-pressure accumulator line 960, the terminal line 920, and the second merging line 940. The main control valve 400 may transfer the fluid, which is received from the second pump 320 and the second merging line 940 through the second pump line 520, to the head chamber 240 through the head line 710. Further, the fluid in the rod chamber 250 may flow to the main control valve 400 through the rod line 720 and then be discharged to the tank T through the drain line Dr. In this case, as the fluid stored in the high-pressure accumulator 950 assists the second pump 320, fuel efficiency and/or performance may be improved compared to the case of FIG. 12.

Further, operations frequently used by the user include a swing-acceleration operation in which the swing actuator 100 is accelerated and a swing-deceleration operation in which the swing actuator 100 is decelerated.

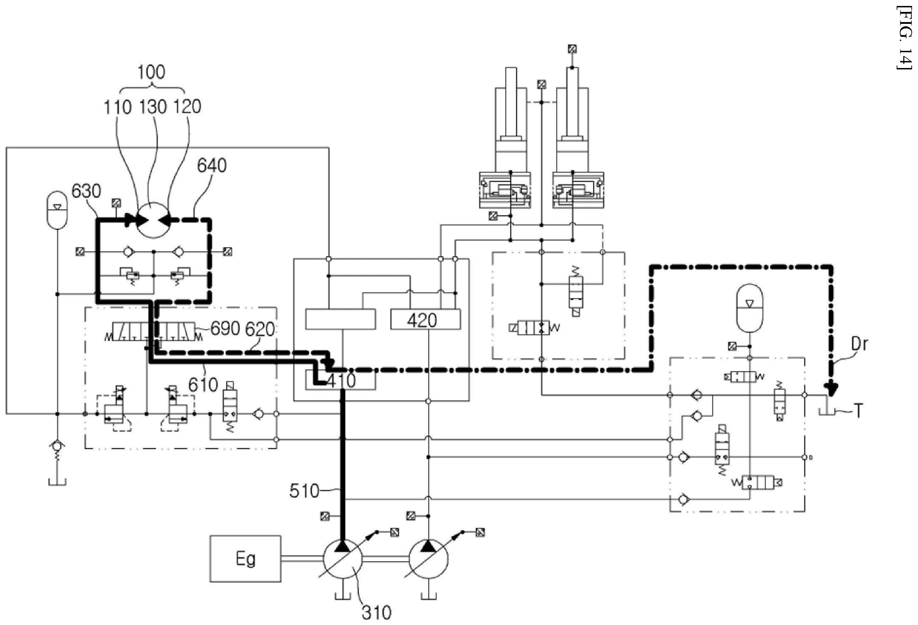

Referring to FIG. 14, when the operator selects the normal mode and performs the swing-acceleration operation, the main control valve 400 provides communication between the first pump line 510 and the first swing line 610 and provides communication between the second swing line 620 and the drain line Dr. The swing direction control valve 690 provides communication between the first swing line 610 and the third swing line 630 and provides communication between the fourth swing line 640 and the second swing line 620, so that fluid discharged from the first pump 310 sequentially passes through the first pump line 510, the main control valve 400, the first swing line 610, the swing direction control valve 690, the third swing line 630, the first opening 110, the second opening 120, the fourth swing line 640, the swing direction control valve 690, the second swing line 620, the main control valve 400, and the drain line Dr to be discharged to the tank T, and the rotor 130 may be accelerated and rotated in one direction.

Although not shown here, when the main control valve 400 provides communication between the first pump line 510 and the second swing line 620 and provides communication between the first swing line 610 and the drain line Dr, and the swing direction control valve 690 provides communication between the second swing line 620 and the fourth swing line 640 and provides communication between the third swing line 630 and the first swing line 610, the fluid discharged from the first pump 310 sequentially passes through the first pump line 510, the main control valve 400, the second swing line 620, the swing direction control valve 690, the fourth swing line 640, the second opening 120, the first opening 110, the third swing line 630, the swing direction control valve 690, the first swing line 610, the main control valve 400, and the drain line Dr to be discharged to the tank T, and the rotor 130 may be accelerated and rotated in an opposite direction.

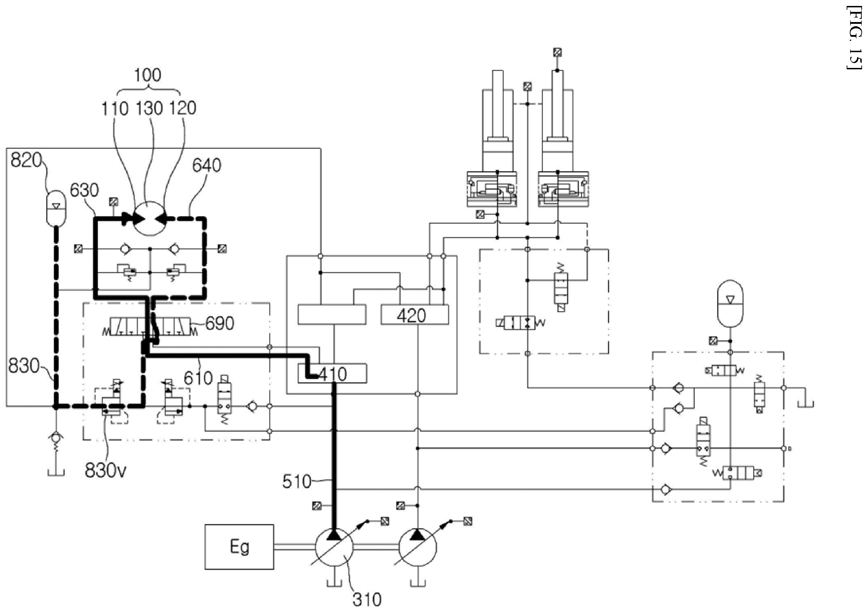

On the other hand, referring to FIG. 15, when the operator selects the regeneration mode and performs the swing-acceleration operation, the main control valve 400 provides communication between the first pump line 510 and the first swing line 610, the swing direction control valve 690 provides communication between the first swing line 610 and the third swing line 630 and provides communication between the fourth swing line 640 and the swing regeneration line 810, and the low-pressure accumulator valve 830v opens the low-pressure accumulator line 830. Accordingly, fluid discharged from the first pump 310 sequentially passes through the first pump line 510, the main control valve 400, the first swing line 610, the swing direction control valve 690, the third swing line 630, the first opening 110, the second opening 120, the fourth swing line 640, the swing direction control valve 690, the swing regeneration line 810, and the low-pressure accumulator line 830 to be stored in the low-pressure accumulator 820, and the rotor 130 may be accelerated and rotated in one direction.

Although not shown here, when the main control valve 400 provides communication between the first pump line 510 and the second swing line 620, the swing direction control valve 690 provides communication between the second swing line 620 and the fourth swing line 640 and provides communication between the third swing line 630 and the swing regeneration line 810, and the low-pressure accumulator valve 830v opens the low-pressure accumulator line 830, the fluid discharged from the first pump 310 sequentially passes through the first pump line 510, the main control valve 400, the second swing line 620, the swing direction control valve 690, the fourth swing line 640, the second opening 120, the first opening 110, the third swing line 630, the swing direction control valve 690, the swing regeneration line 810, and the low-pressure accumulator line 830 to be stored in the low-pressure accumulator 820, and the rotor 130 may be accelerated and rotated in an opposite direction.

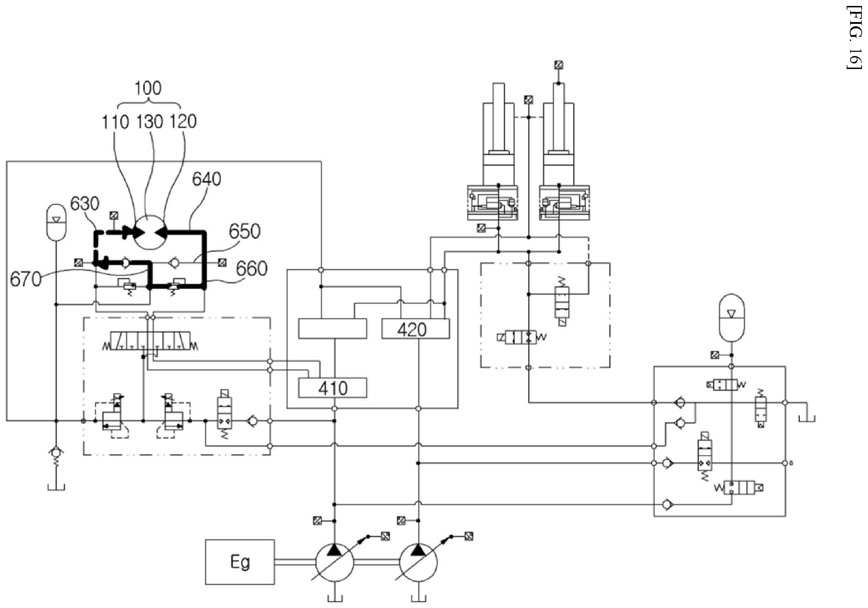

Also, referring to FIG. 16, when the operator selects the normal mode and performs the swing-deceleration operation, fluid discharged from the second opening 120 sequentially passes through the fourth swing line 640, the sixth swing line 660, the seventh swing line 670, the fifth swing line 650, and the third swing line 630 and then flows into the first opening 110, and the rotor 130 may be decelerated and rotated in one direction.

Although not shown here, when fluid discharged from the first opening 110 sequentially passes through the third swing line 630, the sixth swing line 660, the seventh swing line 670, the fifth swing line 650, and the fourth swing line 640 and then flows into the second opening 120, the rotor 130 may be decelerated and rotated in an opposite direction.

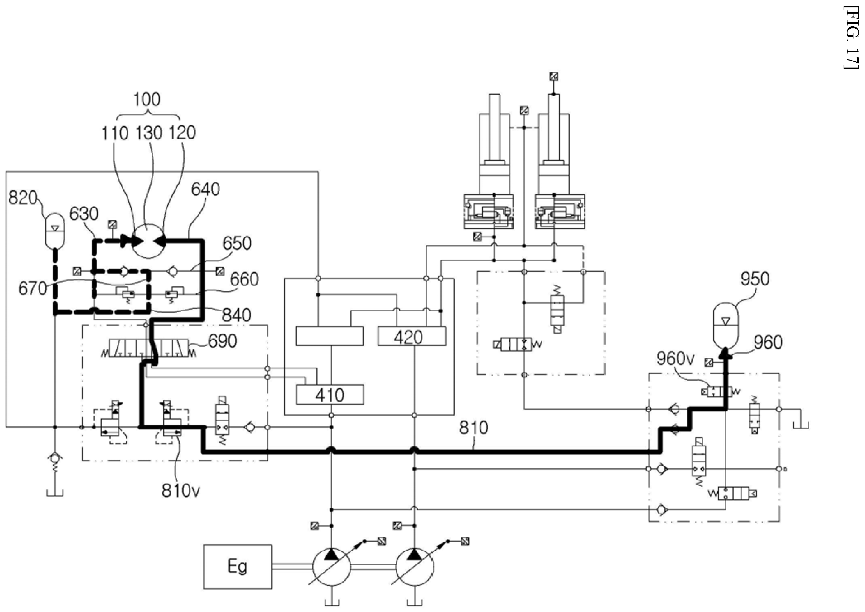

On the other hand, referring to FIG. 17, when the operator selects the regeneration mode and performs the swing-deceleration operation, the swing direction control valve 690 provides communication between the fourth swing line 640 and the swing regeneration line 810, the swing regeneration valve 810v opens the swing regeneration line 810, and the high-pressure accumulator valve 960v opens the high-pressure accumulator line 960. Accordingly, fluid discharged from the second opening 120 sequentially passes through the fourth swing line 640, the swing direction control valve 690, the swing regeneration line 810, the terminal line 920, and the high-pressure accumulator line 960 to be stored in the high-pressure accumulator 950, and the rotor 130 may be decelerated and rotated in one direction. At this time, the low-pressure accumulator valve 830v closes the low-pressure accumulator line 830, and fluid in the low-pressure accumulator 820 may flow to a suction line of the swing actuator 100 among the swing lines 600 through the make-up line 840.

Although not shown here, when the swing direction control valve 690 provides communication between the third swing line 630 and the swing regeneration line 810, the swing regeneration valve 810v opens the swing regeneration line 810, and the high-pressure accumulator valve 960v opens the high-pressure accumulator line 960, the fluid discharged from the first opening 110 sequentially passes through the third swing line 630, the swing direction control valve 690, the swing regeneration line 810, the terminal line 920, and the high-pressure accumulator line 960 to be stored in the high-pressure accumulator 950, and the rotor 130 may be decelerated and rotated in an opposite direction.

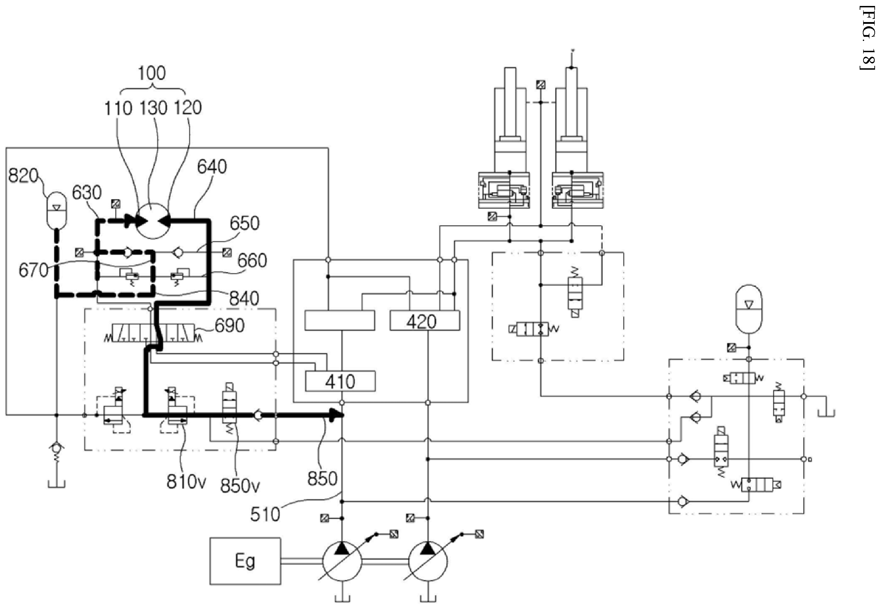

Meanwhile, when fluid cannot be stored in the high-pressure accumulator 950 or a flow rate required for the first pump line 510 is large, as shown in FIG. 18, a third merging valve 850v opens a third merging line 850, so that fluid in the swing regeneration line 810 may flow to the first pump line 510.

As shown in FIGS. 15, 17, and 18, by regenerating fluid in the swing line 600 when accelerating or decelerating a swing in the regeneration mode, fuel efficiency and/or performance may be improved compared to a case where a swing is accelerated or decelerated in the normal mode as shown in FIGS. 14 and 16.

Further, an operation frequently used by the user includes a jack-up operation in which the construction machine is lifted while pressing the ground with the bucket Bk. During the jack-up operation, a pressure of the rod chamber 250 must be quickly increased and fluid in the head chamber 240 must be quickly decreased, which may be a condition in which it is difficult to perform the regeneration mode.

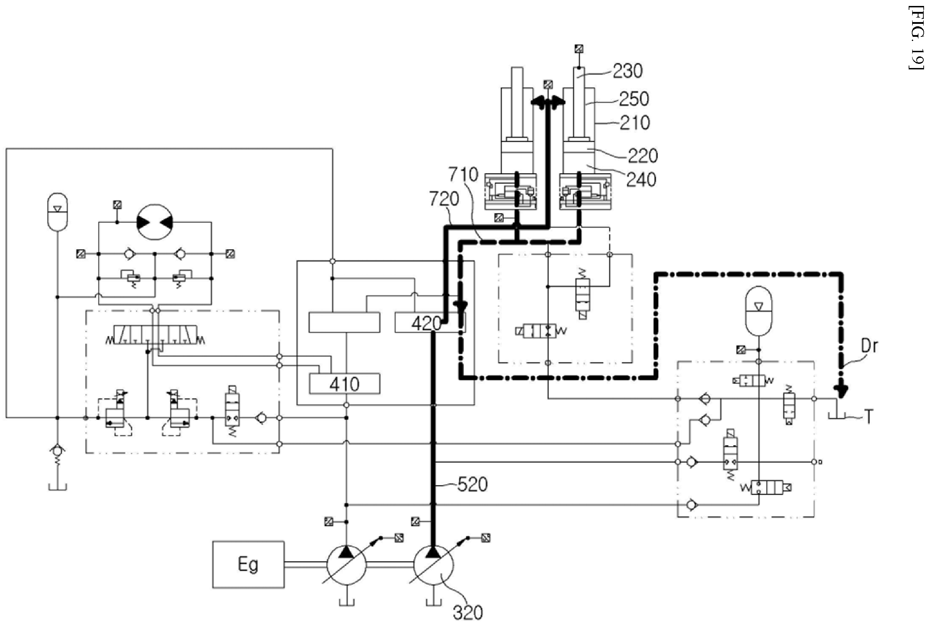

Accordingly, when the jack-up operation is performed, the mode is forcibly converted to the normal mode even if the operator has selected the regeneration mode. As shown in FIG. 19, fluid discharged from the second pump 320 sequentially passes through the second pump line 520, the main control valve 400, and the rod line 720 to flow into the rod chamber 250, and the fluid in the head chamber 240 may sequentially pass through the head line 710, the main control valve 400, and the drain line Dr to be discharged to the tank T.

When the jack-up operation is stopped, the mode may be converted back to the regeneration mode selected by the operator.

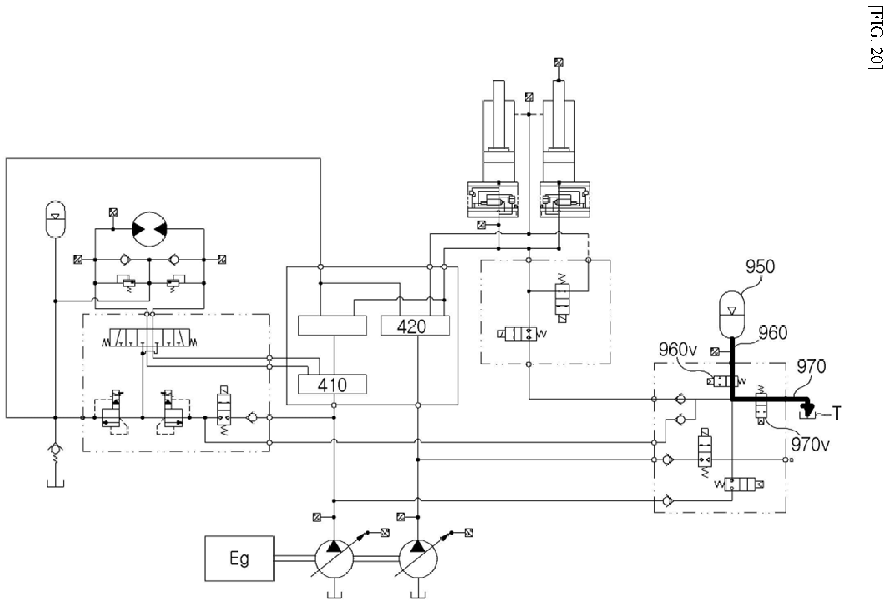

Meanwhile, when the operator selects the normal mode or performs a key-off, as shown in FIG. 20, the high-pressure accumulator valve 960v opens the high-pressure accumulator line 960 and the safety valve 970v opens the safety line 970, so that fluid in the high-pressure accumulator 950 is discharged to the tank T, whereby system safety may be secured.

Since the construction machine according to the present embodiment having such a configuration includes the hydraulic circuit having the regeneration line Reg and the control unit configured to control the same, fuel efficiency and/or performance may be improved by regenerating fluid of at least one of the swing line 600 and the boom line 700.

Further, since the hydraulic circuit and the control unit are formed to determine the pump flow rate (Q_p1, Q_p2) from the difference between the supply flow rate (Q_s1, Q_s2) and the regeneration flow rate (Q_r1, Q_r2) determined according to the mode, the fuel efficiency may be intensively improved, the performance may be intensively improved, or the fuel efficiency and performance may be improved at a desired ratio.

Further, since the hydraulic circuit and the control unit are formed to activate the regeneration line Reg when the operator has an intention to activate the regeneration line Reg, a situation allows for the activation of the regeneration line Reg, and an operation to be performed is an operation having high regeneration efficiency, fuel efficiency and/or performance may be effectively and efficiently improved.

Further, since the hydraulic circuit and the control unit are formed to open one of the first merging line 930 and the second merging line 940 having higher regeneration efficiency, the improvement in fuel efficiency and/or performance may be maximized.

Meanwhile, a fuel efficiency improvement rate may vary depending on a condition under which the fluid stored in the high-pressure accumulator 950 is merged into the pump line 500. That is, for example, when the fluid stored in the high-pressure accumulator 950 is merged into the pump line 500 while an operation mainly used by an operator is performed, fuel efficiency may be improved.

Considering this, it may be preferable that the control unit is formed to open and close the high-pressure accumulator line 960, the terminal line 920, the first merging line 930, and the second merging line 940 (hereinafter, referred to as merging flow paths 920, 930, 940, and 960) such that a predetermined flow rate flows from the high-pressure accumulator 950 to the pump line 500 under a predetermined condition.

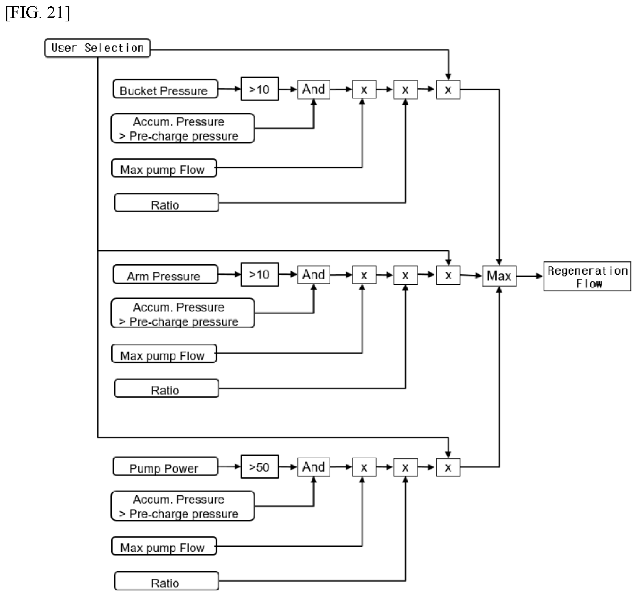

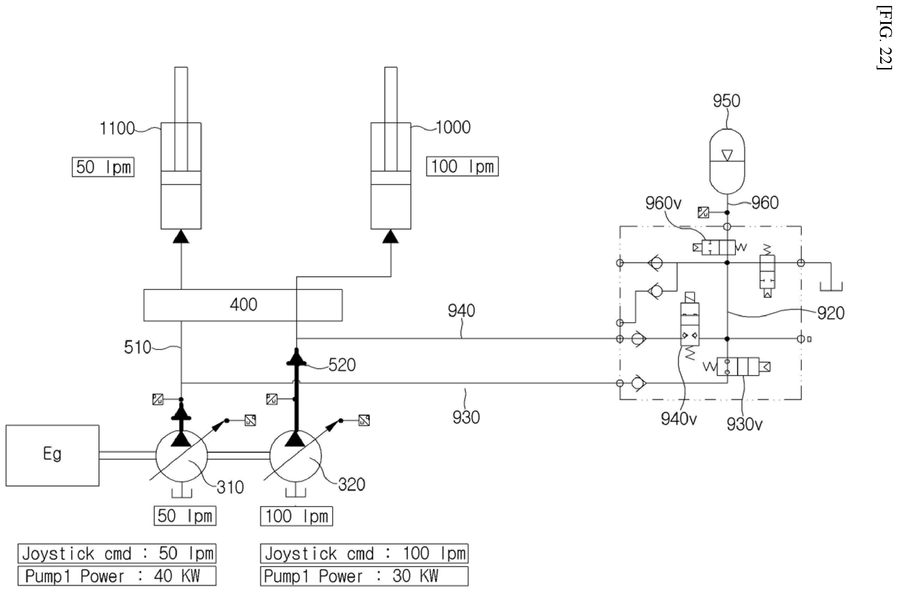

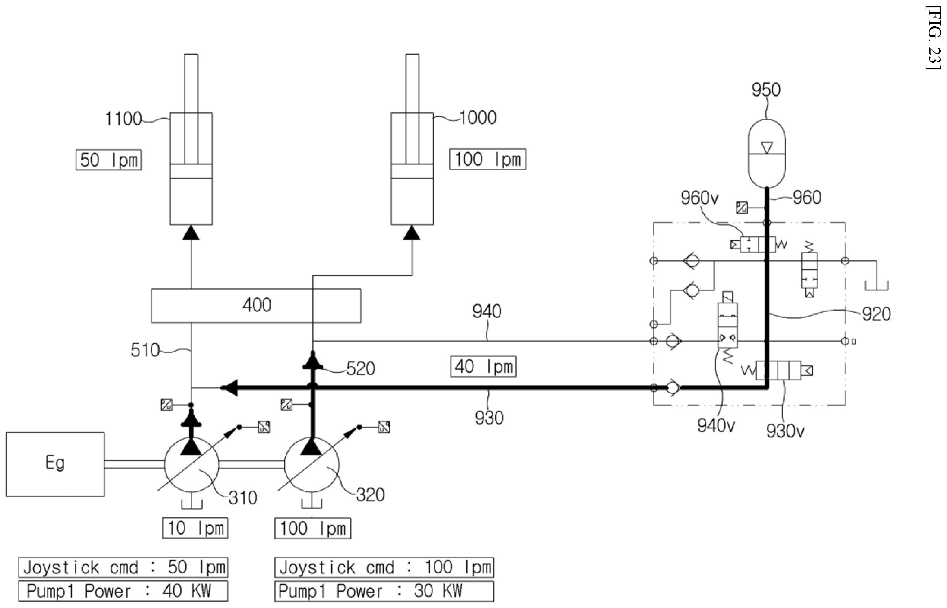

FIG. 21 is a flowchart illustrating logic for determining a condition and a flow rate for merging fluid into a pump in a hydraulic circuit of a construction machine according to another embodiment of the present disclosure, FIG. 22 is a schematic diagram for explaining an operating principle of a hydraulic circuit controlled according to the logic of FIG. 21, illustrating a flow rate when merging does not occur because an output of the pump is small, and FIG. 23 is a schematic diagram for explaining an operating principle of the hydraulic circuit controlled according to the logic of FIG. 21, illustrating a flow rate when the output of the pump is small but an operator desires merging to occur when a bucket actuator is operated.

Referring to FIGS. 21 to 23, a construction machine according to another embodiment of the present disclosure may include a hydraulic circuit similar to that of the above-described embodiment.

Here, the hydraulic circuit further includes other actuators such as an arm actuator 1000 for rotating an arm Am and a bucket actuator 1100 for rotating a bucket Bk as well as the swing actuator 100 and the boom actuator 200, and the other actuators may also communicate with the pump line 500 through the main control valve 400.

Further, an operator selects a target actuator from a plurality of actuators through a target actuator selector, and the control unit may be formed to open the merging flow paths 920, 930, 940, and 960 when the target actuator is operated under a predetermined condition. That is, in the case of the present embodiment, the operator may determine that operations using the arm actuator 1000 and the bucket actuator 1100 are mainly used operations and select the arm actuator 1000 and the bucket actuator 1100 as the target actuators. The control unit may be formed to store fluid of at least one of the swing line 600 and the boom line 700 in the high-pressure accumulator 950 and then open the merging flow paths 920, 930, 940, and 960 when at least one of the arm actuator 1000 and the bucket actuator 1100 is used.

Here, it is not preferable that the merging flow paths 920, 930, 940, and 960 are unconditionally opened because at least one of the arm actuator 1000 and the bucket actuator 1100 is used under a condition in which fuel efficiency is not improved. Accordingly, as shown in FIG. 21, it may be preferable that the control unit is formed to control the merging flow paths 920, 930, 940, and 960 by comprehensively considering an output of the pump unit 300, a pressure of the target actuator, a pressure of the high-pressure accumulator 950, and the selection of the operator.

Specifically, the control unit may be formed to open the merging flow paths 920, 930, 940, and 960 when the output of the pump unit 300 is greater than a predetermined reference output (e.g., 50 kw).

Further, the control unit may be formed to open the merging flow paths 920, 930, 940, and 960 when the pressure of the target actuator is greater than a predetermined reference pressure (e.g., 10 bar).

Further, the control unit may be formed to open the merging flow paths 920, 930, 940, and 960 when the pressure of the high-pressure accumulator 950 is greater than a predetermined value.

Further, the operator sets a predetermined ratio for each of the target actuator and the pump unit 300, and the control unit may be formed to control the merging flow paths 920, 930, 940, and 960 such that a maximum value among calculated flow rates obtained by multiplying the ratio by a maximum flow rate that may flow from the high-pressure accumulator 950 to the pump line 500 flows from the high-pressure accumulator 950 to the pump line 500.

Further, when the target actuator includes a first target actuator communicating with the first pump line 510 and a second target actuator communicating with the second pump line 520, a first ratio for the first target actuator, a second ratio for the second target actuator, a third ratio for the first pump 310, and a fourth ratio for the second pump 320 are set by the operator. The control unit may be formed to calculate: a first calculated flow rate obtained by multiplying a maximum flow rate that may flow from the high-pressure accumulator 950 to the first pump line 510 for the operation of the first target actuator by the first ratio; a second calculated flow rate obtained by multiplying a maximum flow rate that may flow from the high-pressure accumulator 950 to the second pump line 520 for the operation of the second target actuator by the second ratio; a third calculated flow rate obtained by multiplying a maximum flow rate that may flow from the high-pressure accumulator 950 to the first pump line 510 for the operation of the first pump 310 by the third ratio; and a fourth calculated flow rate obtained by multiplying a maximum flow rate that may flow from the high-pressure accumulator 950 to the second pump line 520 for the operation of the second pump 320 by the fourth ratio.

Further, the control unit may be formed to control the first merging line 930 and the second merging line 940 such that a maximum value among the first calculated flow rate, the second calculated flow rate, the third calculated flow rate, and the fourth calculated flow rate flows from the high-pressure accumulator 950 to the pump line 500.

That is, when the maximum value is the first calculated flow rate, the control unit controls the first calculated flow rate to flow through the first merging line 930. When the maximum value is the second calculated flow rate, the control unit controls the second calculated flow rate to flow through the second merging line 940. When the maximum value is the third calculated flow rate, the control unit controls the third calculated flow rate to flow through the first merging line 930. When the maximum value is the fourth calculated flow rate, the control unit controls the fourth calculated flow rate to flow through the second merging line 940.

According to such a configuration, for example, even if commands are input to the bucket actuator 1100 and the arm actuator 1000 through a joystick in the situation of FIG. 22, the merging flow paths 920, 930, 940, and 960 may be closed when the output of the pump unit 300 is lower than the reference output.

Alternatively, in the situation of FIG. 23, even if the output of the pump unit 300 is lower than the reference output (corrected from reference pressure based on context), if the operator desires regeneration to forcibly occur when the bucket actuator 1100 is operated, the first merging line 930 may be opened and the second merging line 940 may be closed. Here, the flow rate flowing to the first pump line 510 through the first merging line 930 is determined according to the logic of FIG. 21, and 40 lpm is merely an example.

Here, the fluid of the high-pressure accumulator 950 does not merge into the pump line 500 simply because the target actuator is operated. Rather, when it is determined that a flow rate is required from the perspective of the entire equipment when the target actuator is operated, the fluid of the high-pressure accumulator 950 merges into the pump line 500. Accordingly, for example, when the user operates the bucket Bk, an effect that the entire equipment moves smoothly may be felt rather than an effect that only the bucket Bk moves well.

## Claims

1. A construction machine comprising:
a pump unit 300 including a first pump 310 and a second pump 320 connected to an engine Eg;
a pump line 500 including a first pump line 510 through which a flow rate is discharged from the first pump 310 and a second pump line 520 through which a flow rate is discharged from the second pump 320;
a main control valve 400 connected on the first pump line 510 and the second pump line 520;
a swing line 600 configured to provide communication between the main control valve 400 and a swing actuator 100;
a boom line 700 configured to provide communication between the main control valve 400 and a boom actuator 200;
a regeneration line Reg including a first merging line 930 communicating with the first pump line 510 and a second merging line 940 communicating with the second pump line 520, the regeneration line Reg being configured to provide communication between at least one of the swing line 600 and the boom line 700 and the pump line 500; and
a control unit configured to control to open one of the first merging line 930 and the second merging line 940 having higher regeneration efficiency.

2. The construction machine of claim 1, wherein the regeneration line Reg further includes a first merging valve 930v configured to open and close the first merging line 930 and a second merging valve 940v configured to open and close the second merging line 940, and
wherein the control unit is configured to determine opening and closing of the first merging valve 930v or the second merging valve 940v by comparing an output P1 Power required for the first pump 310 and an output P2 Power required for the second pump 320.

3. The construction machine of claim 2, wherein the control unit is configured to calculate the output P1 Power required for the first pump 310 by multiplying a pressure p_p1 of the first pump 310 and a required flow rate Q_p1 cmd for the first pump 310, and to calculate the output P2 Power required for the second pump 320 by multiplying a pressure p_p2 of the second pump 320 and a required flow rate Q_p2 cmd for the second pump 320.

4. The construction machine of claim 3, wherein the control unit is configured to compare the required flow rate Q_p1 cmd for the first pump 310 with a predetermined reference flow rate, and to provide communication through the regeneration line Reg when the required flow rate Q_p1 cmd for the first pump 310 is greater than the reference flow rate.

5. The construction machine of claim 3, wherein the control unit is configured to compare the pressure p_p1 of the first pump 310 with a predetermined reference pressure, and to provide communication through the regeneration line Reg when the pressure p_p1 of the first pump 310 is greater than the reference pressure.

6. The construction machine of claim 3, wherein, when the required flow rate Q_p1 cmd for the first pump 310 is equal to or less than a predetermined reference flow rate or when the pressure p_p1 of the first pump 310 is equal to or less than a predetermined reference pressure, the output P1 Power required for the first pump 310 is considered to be less than the output P2 Power required for the second pump 320, and the first merging line 930 is closed and the second merging line 940 is opened.

7. The construction machine of claim 2, wherein the regeneration line Reg further includes:
a swing regeneration line 810 branched from the swing line 600;
a swing regeneration valve 810v configured to open and close the swing regeneration line 810;
a boom regeneration line 910 branched from the boom line 700;
a boom regeneration valve 910v configured to open and close the boom regeneration line 910; and
a terminal line 920 configured to provide communication between the swing regeneration line 810 and the boom regeneration line 910 and the first merging line 930 and the second merging line 940.

8. The construction machine of claim 7, wherein the regeneration line Reg further includes a high-pressure accumulator 950 for storing and discharging fluid, a high-pressure accumulator line 960 configured to provide communication between the terminal line 920 and the high-pressure accumulator 950, and a high-pressure accumulator valve 960v configured to open and close the high-pressure accumulator line 960.

9. The construction machine of claim 7, wherein the regeneration line Reg further includes a tank T for storing fluid, a safety line 970 configured to provide communication between the terminal line 920 and the tank T, and a safety valve 970v configured to open and close the safety line 970.

10. The construction machine of claim 7, wherein the regeneration line Reg further includes a third merging line 850 branched from the swing regeneration line 810 and communicating with the first pump line 510, and a third merging valve 850v configured to open and close the third merging line 850.

11. The construction machine of claim 7, wherein the regeneration line Reg further includes a low-pressure accumulator 820 for storing and discharging fluid, a low-pressure accumulator line 830 configured to provide communication between the low-pressure accumulator 820 and the swing regeneration line 810, a low-pressure accumulator valve 830v configured to open and close the low-pressure accumulator line 830, and a make-up line 840 configured to provide communication between the low-pressure accumulator line 830 and the swing line 600.

12. The construction machine of claim 7, wherein the boom actuator 200 includes a cylinder 210, a piston 220 capable of reciprocating inside the cylinder 210, and a rod 230 extending from the piston 220 to the outside of the cylinder 210,
wherein the inside of the cylinder 210 is divided into a pair of chambers 240 and 250 by the piston 220,
wherein the pair of chambers 240 and 250 includes a rod chamber 250 in which the rod 230 is received and a head chamber 240 which is a chamber on the opposite side of the rod chamber 250, and
wherein the boom line 700 includes a head line 710 configured to provide communication between the main control valve 400 and the head chamber 240, a rod line 720 configured to provide communication between the main control valve 400 and the rod chamber 250, a cavitation line 730 configured to provide communication between the head line 710 and the rod line 720, and a cavitation valve 730v configured to open and close the cavitation line 730.

13. The construction machine of claim 12, wherein the boom regeneration line 910 is branched from the cavitation line 730.

14. The construction machine of claim 7, wherein the swing line 600 further includes a swing direction control valve 690 configured to control a flow direction of fluid in the swing line 600, and the swing regeneration line 810 is configured to communicate with and be shielded from the swing line 600 by the swing direction control valve 690.

15. A construction machine comprising:
a first pump 310 configured to supply a flow rate to a swing actuator 100 through a first pump line 510 and a second pump 320 configured to supply a flow rate to a boom actuator 200 through a second pump line 520;
a high-pressure accumulator 950 for storing and discharging fluid from the swing actuator 100 or the boom actuator 200;
a first merging line 930 configured to provide communication between the high-pressure accumulator 950 and the first pump line 510;
a second merging line 940 configured to provide communication between the high-pressure accumulator 950 and the second pump line 520; and
a control unit configured to control to open one of the first merging line 930 and the second merging line 940 having higher regeneration efficiency.
